# EUROPEAN PATENT APPLICATION

(11) **EP 4 789 836 A2**
(43) Date of publication of application: **12.08.2026**
(21) Application number: 26151356.8
(22) Date of filing: 12.01.2026
(51) Int. Cl.: B29C 43/24, H01M 4/04, H01M 4/139

(54) **A METHOD OF CALENDERING AN ELECTRODE FILM**

(30) Priority: 15.01.2025 US 202519022567
(71) Applicant: Tesla, Inc., Austin, TX 78725 (US)
(72) Inventor: JAIN, Ritika, Austin, 78725 (US); YEH, David, Austin, 78725 (US); KARELIN, Mark, Austin, 78725 (US); DANG, Thanh, Austin, 78725 (US); SHIRANI, Shayan, Austin, 78725 (US); ZANDIATASHBAR, Ardavan, Austin, 78725 (US); ALURI, Venkata Seshadhar, Austin, 78725 (US); PICKETT, Leonard, Austin, 78725 (US); MANE, Ruturaj, Austin, 78725 (US); BAYATI, Sinan, Austin, 78725 (US); MCCARREN, Christopher, Austin, 78725 (US); KELBEL, Michael, Austin, 78725 (US); TAN, Zeyi, Austin, 78725 (US); BALA, Sachin, Austin, 78725 (US); ZIMMERMANN, Stephen, Austin, 78725 (US); ZHU, Chaoyi, Austin, 78725 (US); WANG, Kaiping, Austin, 78725 (US); SHAH, Vivek Bharat, Austin, 78725 (US); RAJPUT, Ali, Austin, 78725 (US); DIEC, Engelbert, Austin, 78725 (US); SAWKIN, Justin, Austin, 78725 (US); YANG, Gang, Austin, 78725 (US); KRAWCZYK, Jack, Austin, 78725 (US); ZHANG, Chunlei, Austin, 78725 (US)
(74) Representative: Zacco Sweden AB

(57) **Abstract**

Devices, systems and methods used to accurately and/or precisely calender materials and films (e.g., dry electrode materials and/or dry electrode films), and systems thereof, are described. These devices, systems and methods measure thicknesses of films on the calender rollers and/or adjust bulging of calender rollers. Such disclosures may enable active control and/or adjustment of the calendering system in order to more accurately and/or precisely control and/or adjust the thicknesses, densities and/or loadings of films.

## Description

### INCORPORATION BY REFERENCE TO ANY PRIORITY APPLICATIONS

This application claims the benefit of priority to U.S. Patent Application No. 19/022,567, entitled "THICKNESS, TEMPERATURE AND SURFACE CONTROL OF CALENDER ROLLERS AND FILMS, AND METHODS THEREOF" filed on January 15, 2025, which is hereby incorporated by reference in its entirety and for all purposes.

### BACKGROUND

Electrodes implemented in energy storage devices may be manufactured by wet and dry processes. While wet processed electrodes utilize slurry casting methods for forming and controlling the physical properties of electrode films, such methods may not be applicable to dry processed electrode films that may be formed on calender rolling systems. As such, improved methods and systems for manufacturing electrode films would be desirable.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

All of these embodiments are intended to be within the scope of the invention herein disclosed. These and other embodiments will become readily apparent to those skilled in the art from the following detailed description of the preferred embodiments having reference to the attached figures, the invention not being limited to any particular preferred embodiment(s) disclosed.

In one aspect, a method of calendering an electrode film is described. The method includes: rotating a calender roller comprising an electrode film disposed over the calender roller, wherein the electrode film comprises an electrode film thickness; measuring a first distance between a measurement device positioned over the calender roller and the electrode film and the calender roller during rotation of the calender roller; measuring a second distance between the measurement device and the electrode film during rotation of the calender roller; determining the electrode film thickness based at least in part on the first and second distances; and setting a thickness of at least a portion of the electrode film based at least in part on the determined film thickness.

In some embodiments, rotating the calender roller transports the electrode film in a downstream direction to a second calender roller, the calender roller and the second calender roller form a nip comprising a nip distance, and the electrode film enters the nip. In some embodiments, the method further includes adjusting at least one of the nip distance, a first temperature of the calender roller, and the second temperature of the second calender roller. In some embodiments, a first temperature of the calender roller is at least about 150°C. In some embodiments, the calender roll is rotated at a circumferential speed of about 0.1-50 m/min.

In some embodiments, the measurement device comprises a first sensor and a second sensor, wherein the first sensor is positioned over the calender roller and configured to measure the first distance between the first sensor and the calender roller, and wherein the second sensor is positioned over the electrode film and configured to measure the second distance between the second sensor and the electrode film. In some embodiments, measuring of the first and second distances is a contactless measurement. In some embodiments, the contactless measurement is selected from the group consisting of a capacitance measurement, an optical measurement, and combinations thereof. In some embodiments, measuring the first and second distances is performed at a resolution of at most about 0.5 µm. In some embodiments, the measurement device further comprises a bearing attached to a measurement device support, a first wheel and a second wheel, wherein the second wheel is downstream of the first wheel and each of the first and second wheels are in contact with the calender roller when the measurement device is positioned over the calender roller. In some embodiments, the electrode film is a dry electrode film substantially absent of solvent residue.

In another aspect, a calender system for controlling a surface of a calender roller is described. The calender system includes: a calender roller comprising a calendering surface, wherein the calendering surface comprises a localized surface; and a temperature adjusting system comprising a temperature adjusting device positioned over the calendering surface, wherein the temperature adjusting device is configured to adjust a temperature of the localized surface.

In some embodiments, the localized surface is a circumferential surface of the calendering surface. In some embodiments, a localized area the localized surface occupies out of a total area of the calendering surface is at most about 50%. In some embodiments, the temperature adjusting system comprises a plurality of temperature adjusting devices. In some embodiments, the method further includes a temperature probe positioned over the calendering surface and configured to measure a temperature of the localized surface.

In another aspect, a method of adjusting a calender system is described. The method includes applying a temperature adjusting element from a temperature adjusting device to a localized surface to adjust a temperature of a localized surface.

In some embodiments, the temperature adjusting element is selected from the group consisting of a solid, a liquid, a gas, an electromagnetic field, and combinations thereof. In some embodiments, the temperature adjusting element is a gas. In some embodiments, the temperature adjusting element comprises a material comprising a material temperature greater than or less than the temperature of the localized surface. In some embodiments, adjusting the temperature of the localized surface adjusts a bulging of the localized surface.

### BRIEF DESCRIPTION OF THE DRAWINGS

FIG. 1 is a cross-section view illustration of a system for processing a film including measurement devices, according to some embodiments.
FIG. 2 is a cross-section view illustration of a system for processing dry electrode films into an electrode including measurement devices, according to some embodiments.
FIG. 3A is a side perspective view illustration of a system including a measurement device engaged with a calender roller, according to some embodiments.
FIG. 3B is a side view illustration of a measurement device, according to some embodiments.
FIG. 4A is a top view illustration of a calendering system including a pair of side measurement device, according to some embodiments.
FIG. 4B is a front view illustration of a calendering system including a pair of side measurement device, according to some embodiments.
FIG. 5A is a top view illustration of a calendering system including a bridging measurement device, according to some embodiments.
FIG. 5B is a front view illustration of a calendering system including a bridging measurement device, according to some embodiments.
FIG. 6 is flow chart of a method of calendering a film, according to some embodiments.
FIG. 7A is a graph showing the temperature profiles of a calender roller at various times during operation.
FIG. 7B is a graph showing the loading profiles of a film after calendering.
FIG. 8 is an illustration of a calender system including localized surfaces and a temperature adjusting system, according to some embodiments.
FIG. 9 is an illustration of an electrode film calendered by a calendering system with localized areas, according to some embodiments.
FIG. 10 is an illustration of a calendering system including a temperature adjusting system and temperature measurement probes, according to some embodiments.
FIG. 11 is an illustration of a calender roller system including a temperature adjusting system and a multilane film, according to some embodiments.
FIG. 12 is a flowchart showing a method of adjusting the temperature of a localized area of a calender roller, according to some embodiments.
FIG. 13 is a graph showing the mass flow of a material across the width of a calender roller with and without selective cooling of a localized area, according to some embodiments.
FIG. 14 is a graph showing the temperatures across the length of a cross roller of a calender roller surface.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Devices, systems and methods used to accurately and/or precisely calender materials and films (e.g., dry electrode materials and/or dry electrode films), and systems thereof, are described. These devices, systems and methods measure thicknesses of films on the calender rollers and/or adjust bulging of calender rollers. For example, film thickness measurement devices, systems and methods are disclosed, wherein the real-time accurate and/or precise measurements during the roll-to-roll process may enable improved control of film thicknesses. As another example, calender roll bulging control devices, systems and methods are described, wherein calender roll devices that are able to adjust the geometry or bulging of a localized surface of the calendering surface are disclosed.

Such disclosures may enable active control and/or adjustment of the calendering system in order to more accurately and/or precisely control and/or adjust the thicknesses, densities and/or loadings of films. Such methods and systems may be applied to the production of dry electrode film thicknesses, which are not able to be adjusted subsequent to the calendering process.

### Film Thickness Measurement Devices, Systems and Methods Thereof

Methods and devices used to measure a film (e.g., electrode film) thickness on a roller (e.g., calender roller) are described. Such methods and devices may be utilized in calender and/or roller system, for example such as during an electrode film manufacturing process (e.g., dry electrode film manufacturing process). Such methods and devices may enable or may be able to perform in elevated dusty environments, at elevated temperatures and/or high roller speeds while accurately and/or precisely measuring film thicknesses. Such real-time accurate and/or precise measurements during the roll-to-roll process may enable improved control of film thicknesses.

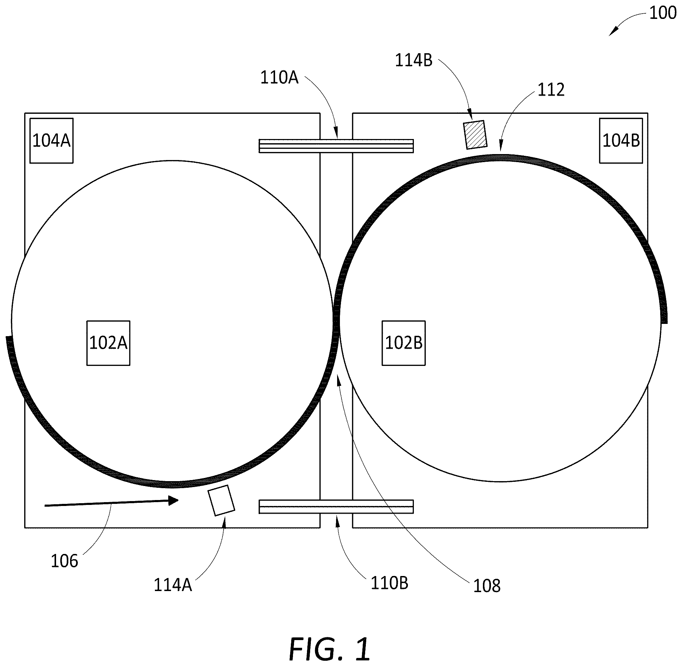

FIG. 1 is an illustration of a calender system 100 for processing a film. The calender system 100 includes a first calender roller 102A within a first bearing block 104A and positioned in a downstream direction 106 is a second calender roller 102B within a second bearing block 104B. The first calender roller 102A and the second calender roller 102B are adjacent to each other and form a nip 108 at a nip distance from each other. The nip distance may be approximated and/or adjusted by a top bearing block device 110A and a bottom bearing block device 110B configured to measure and/or adjust the distance between the first bearing block 104A and the second bearing block 104B. A film 112 is positioned on a bottom surface of the first calender roller 102A, enters the nip 108 downstream the first calender roller 102A, and is positioned on a top surface of the second calender roller 102B downstream from the nip 108. A first measurement device 114A is positioned to measure a first thickness of the film 112 on the first calender roller 102A prior to the film 112 entering the nip 108, and a second measurement device 114B is positioned to measure a second thickness of the film 112 on the second calender roller 102B subsequent to the film 112 entering the nip 108. In some embodiments, the first calender roller 102A may rotate counterclockwise and the second calender roller 102B may rotate clockwise in order to move the film in the downstream direction and transfer the film 112 from the first calender roller 102A to the second calender roller 102B through the nip 108. In some embodiments, a controller (not shown) is communicatively coupled (e.g., via a wired or wireless interface) with the first calender roller 102A, second calender roller 102B, top bearing block device 110A, bottom bearing block device 110B, first measurement device 114A, and/or second measurement device 114B, and is configured to control the thickness of the film 112. In some embodiments, the thickness of the film 112 may be controlled by adjusting the nip distance of the nip 108, the rotational speed and/or temperature of the first calender roller 102A, the rotational speed and/or temperature of the second calender roller 102B, and combinations thereof.

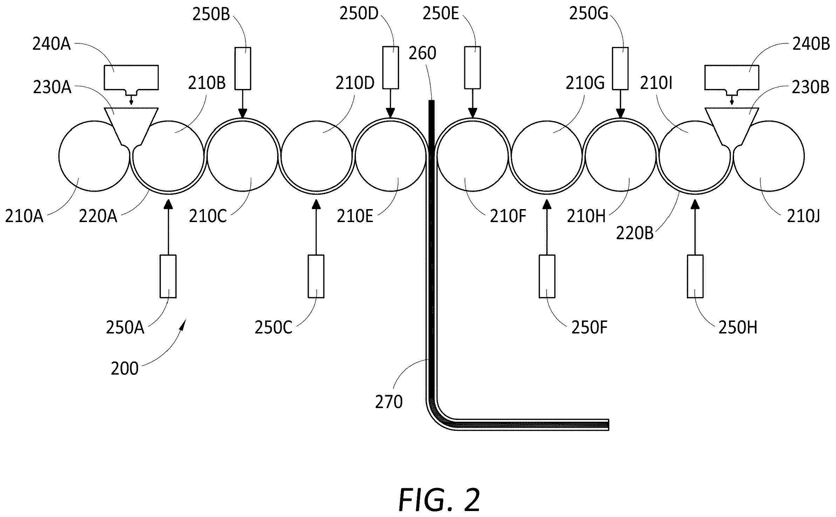

FIG. 2 is an illustration of a calender system 200 for processing dry electrode films into an electrode. As shown in FIG. 2, the calender roller system 200 includes calender rollers 210A, 210B, 210C, 210D, 210E, 210F, 210G, 210H, 210I and 210J, each calender roller (e.g., 210H) configured to form a dry electrode film from an electrode powder mixture and/or to move the dry electrode film 220A and 220B across the system 200. It should be realized that each calender roller 210A, 210B, 210C, 210D, 210E, 210F, 210G, 210H 210I, and 210J can be configured to operate independently of the other calender rollers, or can be configured to operate synchronically and/or in coordination with one or more of the other calender rollers 210. As shown in FIG. 2, two calender roller systems (i.e., 210A, 210B, 210C, 210D and 210E, and 210F, 210G, 210H, 210I, and 210J) are configured to mirror each other. The calender rollers 210A, 210B, 210C, 210D and 210E are configured to move a first dry electrode film 220A across the system 200 downstream in a first direction, and the calender rollers 210F, 210G, 210H, 210I, and 210J are configured to move a second dry electrode film 220B across the system 200 downstream in a second direction, the second direction opposite the first direction. The first dry electrode film 220A and the second dry electrode film 220B are moved across the system 200 such that they are joined at a central axis of the system 200. As shown in FIG. 2, the first dry electrode film 220A is configured to join with the second dry electrode film 220B after each is disposed on the calender rollers 210E and 210F, respectively. As further shown in FIG. 2, the first dry electrode film 220A and the second dry electrode film 220B are joined with each other and a current collector 260 that is disposed between the first dry electrode film 220A and the second dry electrode film 220B to form a dry double-sided electrode 270. It should be realized that the system may include a single dry electrode film such that there is no second electrode film to join therewith. Additionally, a current collector may be joined to the single dry electrode film even in the absence of second dry electrode film.

The system 200 also includes measurement devices 250A, 250B, 250C, 250D, 250E , 250F, 250G, and 250H. Additionally, each of the measurement devices 250A, 250B, 250C, 250D, 250E, 250F, 250G, and 250H is positioned either below (e.g., 250A) or above (e.g., 250B) one of the calender rollers (e.g., 250A is below 210B) on the side of the calender rollers 250 the dry electrode film 220 is positioned over. As shown in FIG. 2, the system 200 includes a dry electrode powder mixture dispenser 240A and 240B. The dry electrode powder mixture dispenser 240A and 240B is positioned at the start of each roller system and is configured to contain and dispense the dry electrode material 230A and 230B into the system 200. The dry electrode material 230A and 230B is dispensed onto a pair of calender rollers, here shown as 210A and 210J, from which it is processed into the dry electrode film 220.

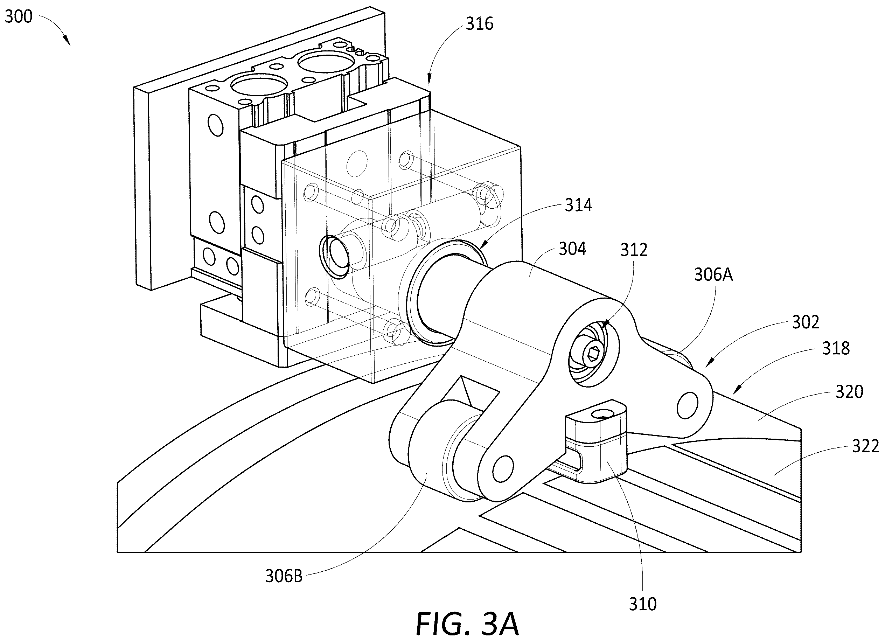

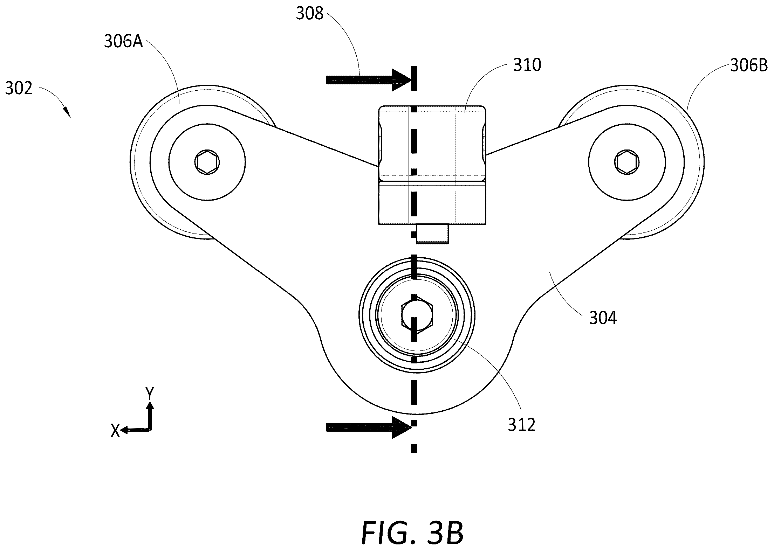

FIG. 3A shows a side perspective view of a system 300 used to measure the thickness of a film over a calender roller, and FIG. 3B shows a side view of the measurement device 302 used in the system 300. A measurement device 302 includes a device body 304 holding a first wheel 306A and in a downstream direction 308 a second wheel 306B. A sensor 310 is positioned between the first and second wheels 306A and 306B attached to the device body 304, wherein the first and second wheels 306A and 306B are positioned lower than the sensor 310 in the y direction (e.g., closer to the calender roller 318). The measurement device 302 includes a bearing 312 within the device body 304 positioned between the first and second wheels 306A and 306B and above the sensor 310. The measurement device 302 is attached to a support 314 through the bearing 312, and the support 314 is attached to a positioning device 316. The positioning device 316 is able to adjust the position of the measurement device in the x, y and z directions.

The system 300 further includes a calender roller 318 shown with a bare surface 320 and films 322 disposed over a surface of the calender roller 318 adjacent to the bare surface 320. The measurement device 302 is positioned over the calender roller 318, with the first and second wheels 306A and 306B in contact with the calender roller 318 on the bare surface 320 and the sensor 310 positioned over both the bare surface 320 and the films 322 at a distance. In some embodiments, the sensor 310 is configured to measure a first distance from the sensor 310 to the bare surface 320 while the calender roller 318 is rotating. In some embodiments, the sensor 310 is configured to measure a second distance from the sensor 310 to the films 322 while the calender roller 318 is rotating. In some embodiments, the measurement device 302 is configured and/or positioned to self-align to be parallel (e.g., the first and second wheels 306A and 306B are parallel) with the downstream direction 308 of the calender roller 318. In some embodiments, wheels are parallel to the downstream direction 308. In some embodiments, the measurement device includes a plurality of sensors. In some embodiments, sensors are perpendicular to the downstream direction 308. In some embodiments, the positioning device is configured to adjust the position of the measurement device in the x, y and/or z directions. In some embodiments, the measurement device is configured self-align in the x, y and/or z directions once in contact with the calender roller (e.g., rotating calender roller).

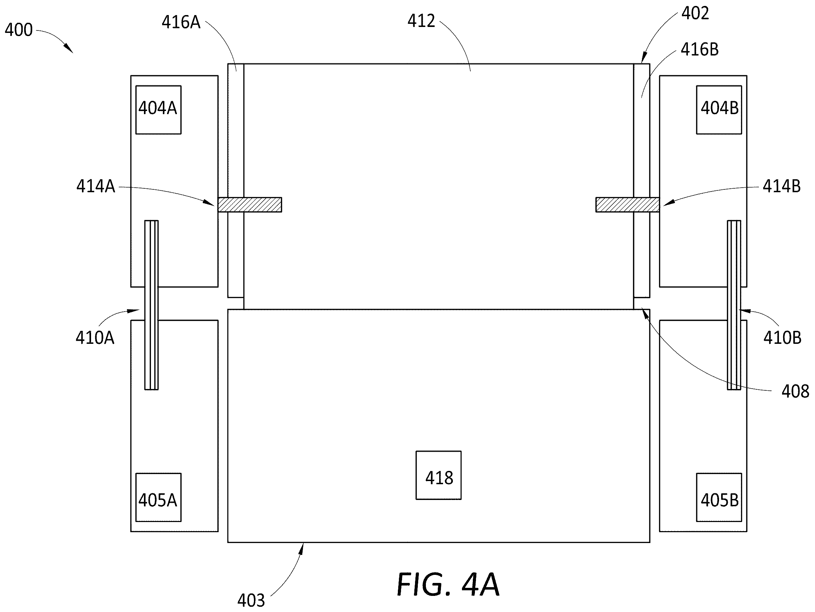

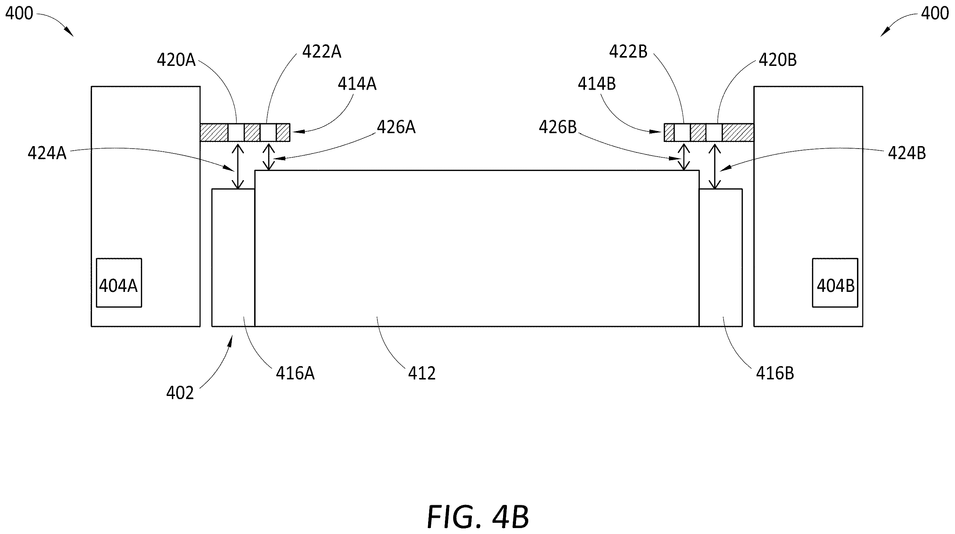

FIGS. 4A and 4B show a calendering system 400 including a pair of side measurement devices for measuring the thickness of a single film. The calender system 400 includes a first calender roller 402 held by a first left bearing block 404A and a first right bearing block 404B, and positioned downstream is a second calender roller 403 held by a second left bearing block 405A and a second right bearing block 405B. The first calender roller 402A and the second calender roller 403 are adjacent to each other and form a nip 408 at a nip distance from each other. The nip distance may be approximated by a left bearing block device 410A and a right bearing block device 410B configured to measure the distance between the first left bearing block 404A and the second left bearing block 405A or the first right bearing block 404B and the second right bearing block 405B, respectively. A film 412 is positioned on a surface of the first calender roller 402, enters the nip 408 downstream from the first calender roller 402, and is carried to a bottom surface (not shown) of the second calender roller 403 downstream from the nip 408. The sides of the film 412 on the first calender roller 402 is between and adjacent to left bare surface 416A and right bare surface 416B of the calender roller 402.

A first measurement device 414A is positioned over the left bare surface 416A and the film 412, and includes a first left sensor 420A configured to measure a first left distance 424A to the left bare surface 416A and a second left sensor 422A configured to measure a second left distance 426A to the film 412 adjacent or near the left bare surface 416A. A second measurement device 414B is positioned over the right bare surface 416B and the film 412, and includes a first right sensor 420B configured to measure a first right distance 424B to the right bare surface 416B and a second right sensor 422B configured to measure a second right distance 426B to the film 412 adjacent or near the right bare surface 416B. As such, the first and second measurement devices 414 are configured to measure the thicknesses of the film 412 adjacent or near the left and right bare surfaces 416, respectively, by comparing the first and second distances 424 and 426. In some embodiments, a controller (not shown) is in electrical communication with the first calender roller 402, second calender roller 403, bearing block devices 404 and/or 405 and measurement devices 414, and is configured to control the thickness of the film 412. In some embodiments, the thickness of the film 412 may be controlled by adjusting the nip distance of the nip 408, the rotational speed and/or temperature of the calender rollers 402 and 403, and combinations thereof.

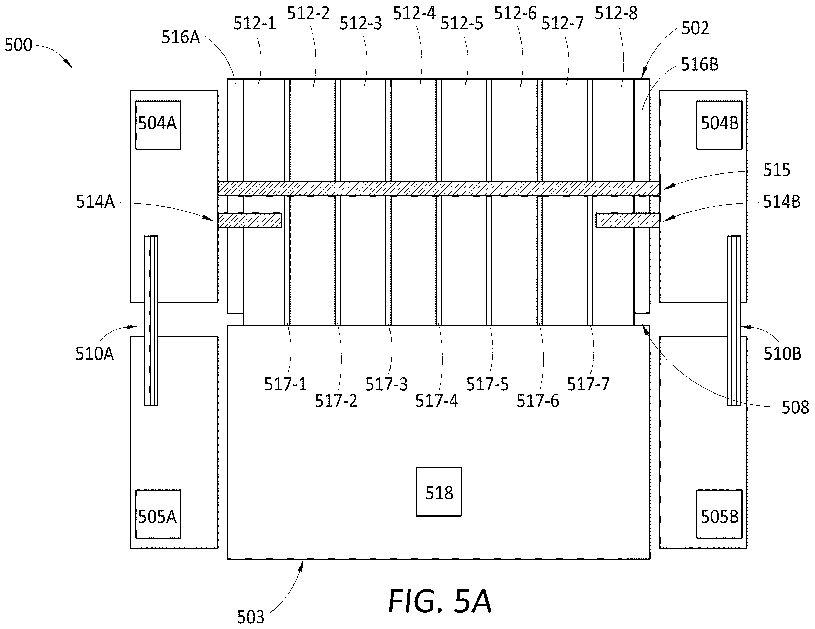

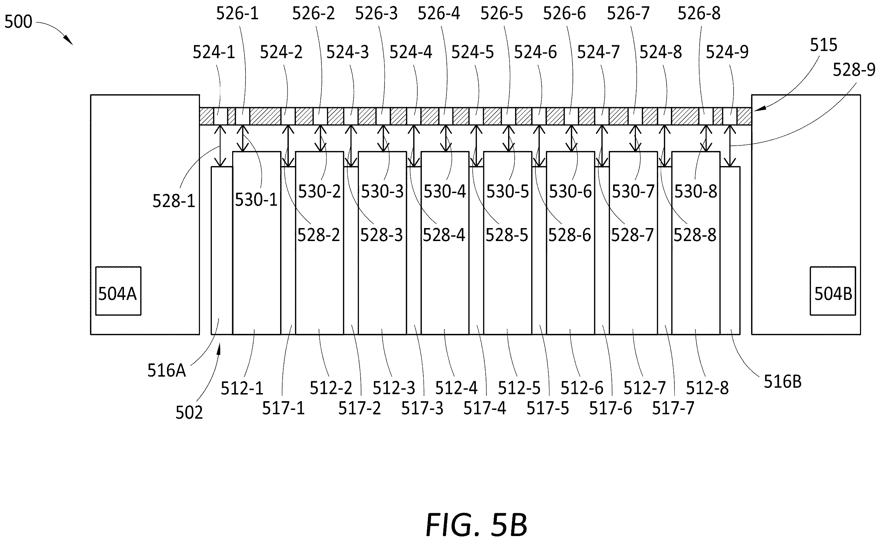

FIGS. 5A and 5B show a calendering system 500 including a pair of side measurement devices and a bridging measurement device for measuring the thickness of a plurality of films. The calender system 500 is similar to the calender system 400 of FIGS. 4A and 4B in that calender system 500 includes a first calender roller 502, a first left bearing block 504A, a first right bearing block 504B, a second calender roller 503, a second left bearing block 505A, a second right bearing block 505B, a nip 508, a left bearing block device 510A and a right bearing block device 510B with similar configurations and structures. A plurality of films 512 (i.e., 512-1 to 512-8) are positioned on a surface of the first calender roller 502, enter the nip 508 downstream from the first calender roller 502, and are carried to a bottom surface (not shown) of the second calender roller 503 downstream from the nip 508. A side of the first film 512-1 on the first calender roller 502 is adjacent to left bare surface 516A, and a side of the eighth film 512-8 on the first calender roller 502 is adjacent to right bare surface 516B. A plurality of bare surface lanes 517 (i.e., 517-1 to 517-7) are each positioned between and adjacent to the plurality of films 512 such that each of the plurality of films 512 are separated from one another by one of the plurality of bare surface lanes 517.

A first measurement device 514A is positioned over the left bare surface 516A and the first film 512-1 and is configured to measure a thickness of the first film 512-1, and a second measurement device 514B is positioned over the right bare surface 516B and the eighth film 512-8 and is configured to measure a thickness of the eighth film 512-8. A bridging measurement device 515 spans the entire length of the first calender roller 502 and is disposed over the plurality of films 512, the bare surfaces 516 and the plurality of bare surface lanes 517. The bridging measurement device 515 includes a plurality of first sensors 524 (i.e., 524-1 to 524-9) configured to measure a plurality bare distances 528 (i.e., 528-1 to 528-9) to each of the left and right bare surfaces 516 and plurality of bare surface lanes 517, and a plurality of second sensors 526 (i.e., 526-1 to 526-8) configured to measure a plurality of film distances 530 (i.e., 530-1 to 530-8) to each of the plurality of films 512. As such, the bridging measurement device 515 through the first and second plurality of sensors 524 and 526 is configured to measure the thicknesses of each of the plurality of films 512 by comparing adjacent bare distances 528 and film distances 530. In some embodiments, a controller (not shown) is in electrical communication with the first calender roller 502, second calender roller 503, bearing block devices 504 and/or 505, measurement devices 514 and bridging measurement device 515, and is configured to control the thickness of each of the plurality of films 512. In some embodiments, the thickness of each of the plurality of films 512 may be controlled by adjusting the nip distance of the nip 508, the rotational speed and/or temperature of the calender rollers 502 and 503, and combinations thereof.

In some embodiments, the calendaring system includes any number of films from 4 to 10. In some embodiments, the calendering system includes and number of first sensors from 1 to 11. In some embodiments, the calendering system includes any number of second sensors from 1 to 10.

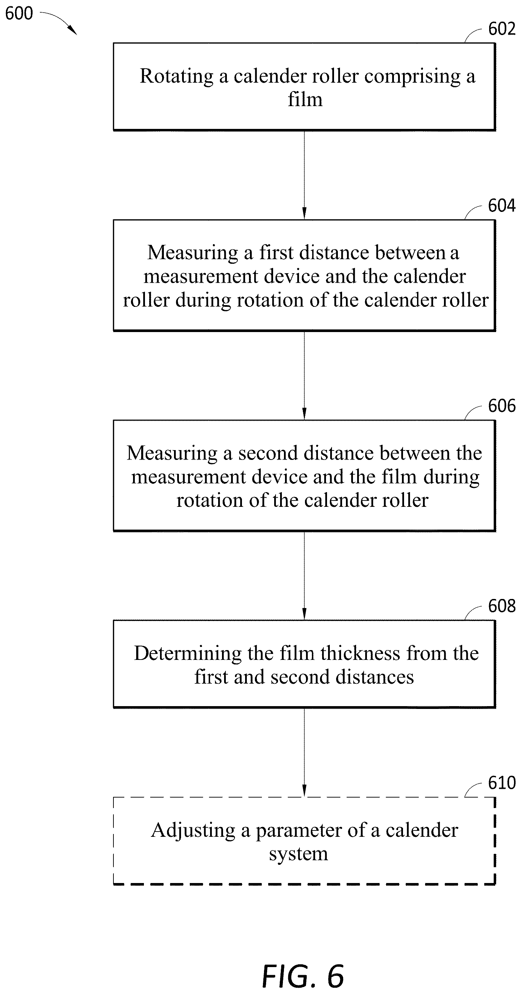

FIG. 6 shows a method 600 of calendering a film (e.g., an electrode film), for example by utilizing the films, devices, apparatuses and/or systems described herein (e.g., FIGS. 1-5B). In some embodiments, a controller may be configured to perform the method 600. The method 600 includes rotating 602 a calender roller comprising an electrode film, measuring 604 a first distance between a measurement device and the calender roller during rotation of the calender roller, measuring 606 a second distance between the measurement device and the electrode film during rotation of the calender roller, and determining 608 the electrode film thickness from the first and second distances. The method 600 further optionally includes adjusting 610 a parameter of a calender system.

In some embodiments, the parameter of the calender system may include a temperature (e.g., internal and/or surface temperature) of a calender roller, the rotational speed of a calender roller (e.g., current, upstream and/or downstream calender roller), a nip distance (e.g., current, upstream and/or downstream nip distance), or any combinations thereof. In some embodiments, the nip distance may be adjusted by adjusting the position of the bearing blocks (e.g., using a bearing block device). In some embodiments, adjusting the parameter of the calender system is configured to adjust the thickness of the film within the calender system. In some embodiments, the method further includes positioning the measurement device over the calender roller and the electrode film. In some embodiments, the method further includes contacting the measurement device (e.g., a wheel of the measurement device) with the calender roller. In some embodiments, rotating the calender roller transports the electrode film in a downstream direction to a second calender roller, the calender roller and the second calender roller form a nip comprising a nip distance, and the electrode film enters the nip.

In some embodiments, a calender roller rotates at a circumferential speed of, of about, of at least, or of at least about, 0.1 m/min, 1 m/min, 2 m/min, 5 m/min, 10 m/min, 15 m/min, 20 m/min, 25 m/min, 30 m/min, 35 m/min, 36 m/min, 37 m/min, 38 m/min, 39 m/min, 40 m/min, 41 m/min, 42 m/min, 43 m/min, 44 m/min, 45 m/min, 46 m/min, 47 m/min, 48 m/min, 49 m/min, 50 m/min, 55 m/min, 60 m/min, 70 m/min, 80 m/min, 90 m/min, or 100 m/min, or any ranges of values therebetween. In some embodiments, a calender roller may have a surface temperature of, of about, of at least, or of at least about, 100°C, 125°C, 150°C, 175°C, 200°C, 225°C, 250°C, 275°C or 300°C, or any range of values therebetween.

In some embodiments, the measurement device includes a plurality of sensors, for example the number of sensors the measurement device includes is, or is at least, 2, 3, 4, 5, 6, 7, 8, 9, 10, 11, 12, 15, 18 or 20, or any range of values therebetween. In some embodiments, the number of measurement devices a calender roll and/or the system includes is, or is at least, 1, 2, 3, 4, 5, 6, 7, 8, 9, 10, 11, 12, 15, 18 or 20, or any range of values therebetween. In some embodiments, each calender roller includes a measurement device.

In some embodiments, measuring of the first and second distances is a contactless measurement. In some embodiments, measurement device and/or sensors include a contactless measurement device and/or sensor, respectively. In some embodiments, the contactless measurement includes a capacitance measurement, an optical measurement, and combinations thereof. In some embodiments, the sensor includes a capacitance sensor (e.g., air capacitance), an optical sensor (e.g., optical reflectance), and combinations thereof. In some embodiments, the sensor is not a profilometer.

In some embodiments, the sensor is configured to measure a distance within a resolution or accuracy of, of about, of at most, or of at most about, 0.01 µm, 0.05 µm, 0.075 µm, 0.1 µm, 0.15 µm, 0.2 µm, 0.3 µm, 0.4 µm, 0.5 µm, 0.6 µm, 0.7 µm, 0.75 µm, 0.8 µm, 0.9 µm, 1 µm, 1.2 µm, 1.5 µm, 2 µm, or 5 µm, or any range of values therebetween. In some embodiments, the measurement device is configured to measure a thickness within a resolution or accuracy of, of about, of at most, or of at most about, 0.01 µm, 0.05 µm, 0.075 µm, 0.1 µm, 0.15 µm, 0.2 µm, 0.3 µm, 0.4 µm, 0.5 µm, 0.6 µm, 0.7 µm, 0.75 µm, 0.8 µm, 0.9 µm, 1 µm, 1.2 µm, 1.5 µm, 2 µm, or 5 µm, or any range of values therebetween. In some embodiments, the resolutions and accuracies described may be achieved at calender roll speeds and/or temperatures described herein.

### Calender Roll Bulging Control Devices, Systems and Methods Thereof

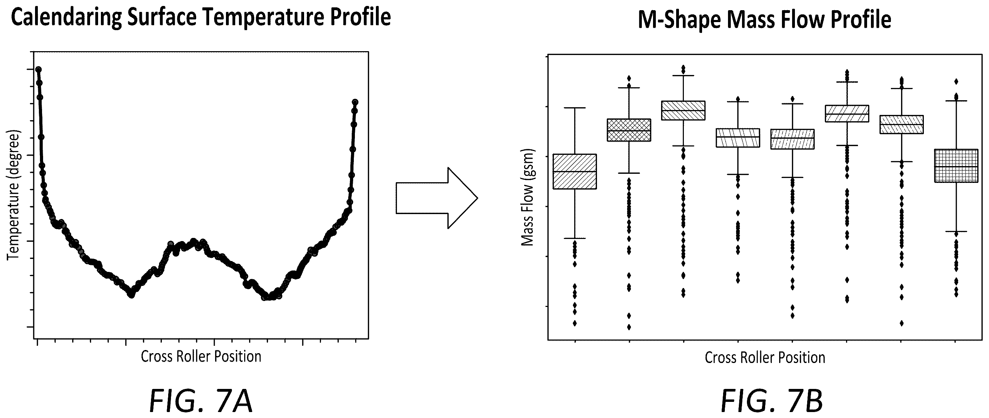

In addition, localized surface temperature variations of the calendering surface may hinder film uniformity. For example, a localized surface of the calendering surface may include a local bulge that deviates from the general deflection or crown of the calendering surface, and/or may include a local temperature difference that deviates from the general temperature of the calendering surface. Deflection and crowning are measured by the height of the calendering surface through the length of the calender roller device relative to the height at an edge of the calender roller, with deflection being negative heights and crowning being positive heights. Such local bulges and/or local temperature differences may hinder film uniformity (e.g., thicknesses, densities and/or loadings). As an example, FIGS. 7A and 7B show the temperature profile and mass flow profile variation of an electrode film at different cross roller location of calendering. The surface temperature can vary across different cross roller positions. This can result in a mass flow profile consistent with the temperature flow profile.

As such, calender roll devices that are able to adjust or control the geometry or bulging (e.g., positive bulging and/or inverse bulging (i.e., divot)) of a localized surface of the calendering surface are disclosed, and methods thereof. Such bulging of the localized surface may be due to inherent roller structural nonuniformity defects, physical defects (e.g., dents) introduced by a material that has been calendered and/or defects introduced through temperature variation of the calender roller (e.g., introduced by the material being calendered and/or active temperature control of the calender roller). Such active control of the calendering surface bulging may be able to aid in forming more uniform thicknesses, densities and/or loadings of films and/or compensate for uneven deposition and/or temperatures of powder and/or films processed by the calender roll device. The calender roll devices are structured and/or configured to apply a temperature adjusting element to a localized surface, thereby actively controlling the temperature and/or bulging of the localized surface.

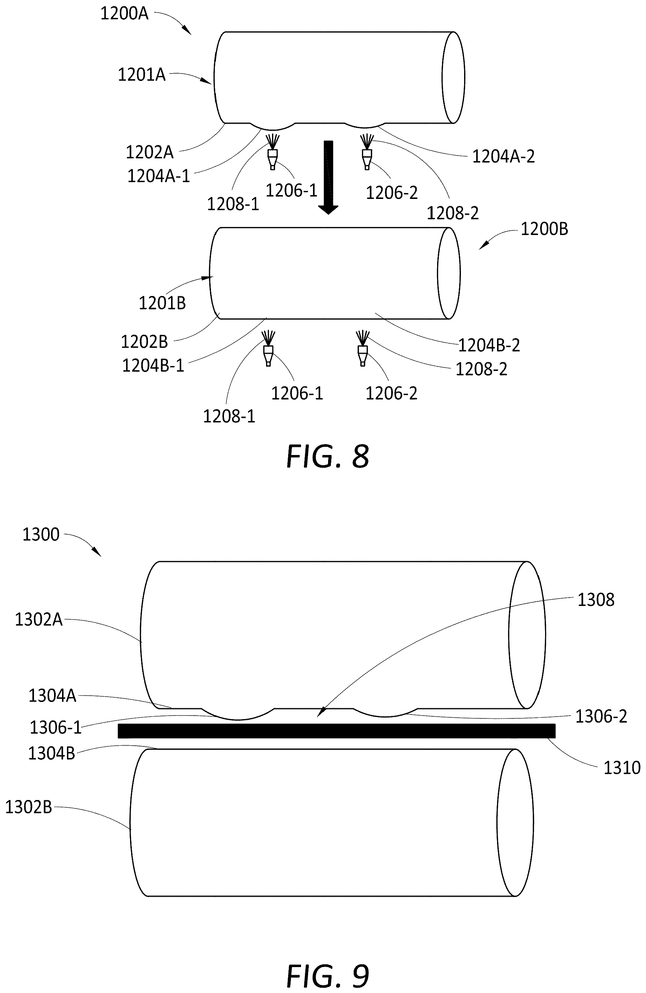

FIG. 8 shows a calender system 1200 with a calender roller 1201 including localized surfaces 1204 with defects that are adjusted using a temperature adjusting system 1206. The initial calendering system 1200A includes an initial calender roller 1201A with a calendering surface 1202A, and where the calendering surface 1202A includes localized surfaces 1204A-1 and 1204A-2 with defects. In some embodiments, the defects may be a temperature defect, bulging defect and/or inverse-bulging defect. In some embodiments, the defects may be the same or different in kind and/or degree. A temperature adjusting system with temperature adjusting devices 1206-1 and 1206-2 are positioned under the localized surfaces 1204A-1 and 1204A-2, respectively, and are configured to apply temperature adjusting elements 1208-1 and 1208-2, respectively, to the localized surfaces 1204A-1 and 1204A-2. After the temperature adjusting elements 1208-1 and 1208-2 are applied to the localized surfaces 1204A-1 and 1204A-2, subsequent calendering system 1200B is formed including a subsequent calender roller 1201B and calendering surface 1202B with localized regions 1204B-1 and 1204B-2. As shown the localized regions 1204B-1 and 1204B-2 no longer include or include reduced defects. Although the defects are depicted as bulges in the calendering surface that are removed by application of the temperature adjustment element, in some embodiments the defect is the inclusion, absence or inverse of a budge (e.g., a divot), a temperature of the localized region that requires adjustment, or combinations thereof.

FIG. 9 shows a calendering system 1300 including a first calender roller 1302A, a second calender roller 1302B, a nip 1308 formed between the calender rollers 1302, and a film 1310 positioned within the nip 1308. A first calendering surface 1304A and a second calendering surface 1304B are adjacent to each other and form the nip 1308, and where the first calendering surface 1304A includes adjusted localized surfaces 1306-1 and 1306-2. Adjusted localized surfaces 1306-1 and 1306-2 may be used to contact and adjust a property of the film 1310 when calendered through the nip 1308.

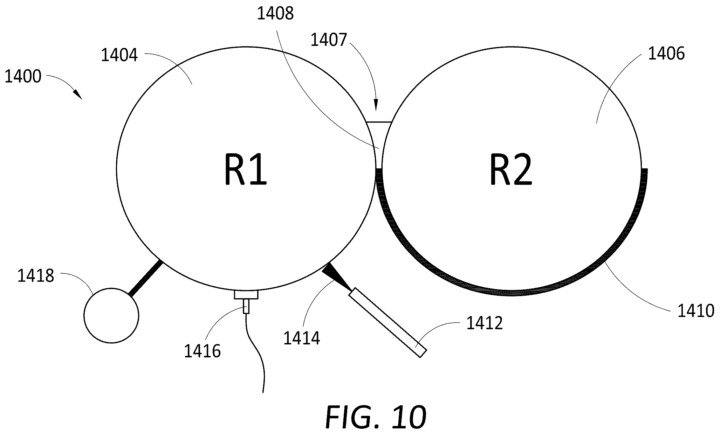

FIG. 10 shows a calender system 1400 for calendering a powder into a film. Calender system 1400 includes a first calender roller 1404 rotating in a first direction R1 clockwise, and a second calender roller 1406 rotating in a second direction R2 counterclockwise. A nip 1407 is formed between the first calender roller 1404 and the second calender roller 1406. Within the nip 1407 is a powder matter 1408, which is calendered by the first calender roller 1404 and the second calender roller 1406 when passing through the nip 1407 to form a film 1410. A temperature adjustment system including a temperature adjusting device 1412 configured to output a temperature adjusting element 1414, a temperature sensor 1416 and a topography sensor 1418 is positioned over the first calender roller 1404 and rotationally subsequent to the nip 1407, and are configured to sense and adjust the temperature and/or bulging of the calendering surface of the first calender roller 1404. In some embodiments, a controller is in electrical communication with the temperature adjustment system and configured to adjust the output of the temperature adjusting device based on the temperature and/or topography detected by the temperature sensor and/or topography sensor.

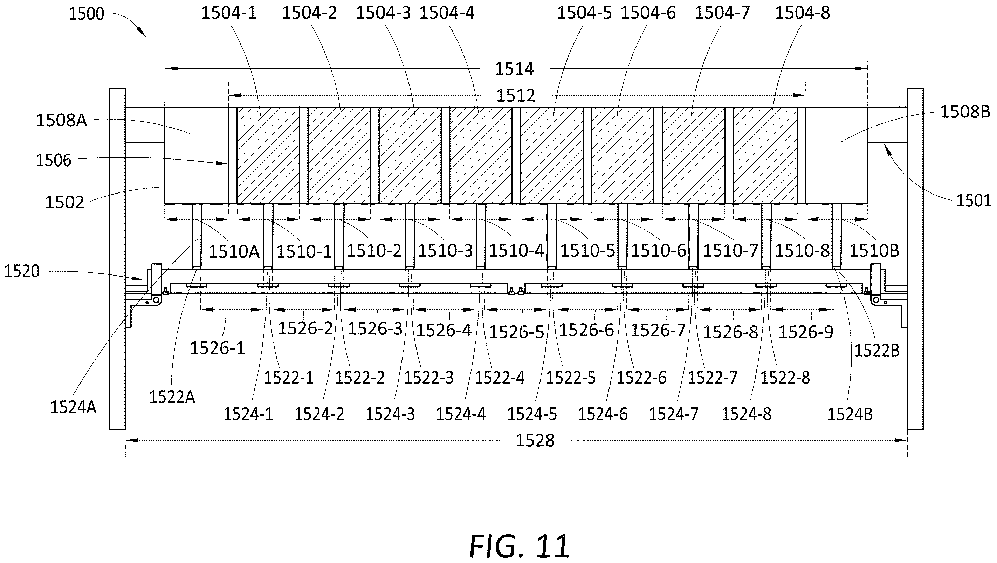

FIG. 11 shows a calender system 1500 including a multilane film 1506. The calender system 1500 includes a calender roller 1501 including a calender surface 1502 with a multilane film 1506 disposed thereover between a left bare surface 1508A and a right bare surface 1508B. In some embodiments, the multilane film is a multilane electrode film including a plurality of electrode films. Each of the plurality of electrode films 1504 (i.e., 1504-1 to 1504-8) of the multilane film 1506 are separated from each other on the calender surface 1502 by bare lanes. The multilane film 1506 has a multilane electrode width 1512 and the calender roller surface 1502 has a calender surface width 1514. Disposed under the calender roller 1501 is a temperature adjusting system 1520 including a plurality of temperature adjusting devices 1522 (i.e., 1522A, 1522B and 1522-1 to 1522-8). The temperature adjusting system 1520 spans the width 1528 between the bearing blocks holding the calender roller 1501, and each temperature adjusting device 1522 is separated from one another along with width 1528 of the temperature adjusting system 1520 by a width 1526 (i.e., 1526-1 to 1526-9). Each temperature adjusting device 1522 is configured to apply a temperature adjusting element 1524 (i.e., 1524A, 1524B and 1524-1 to 1524-8) each at an application width 1510 (i.e., 1510A, 1510B and 1510-1 to 1510-8) to the calender surface 1502. Specifically, temperature adjusting devices 1522A, 1522B and 1522-1 to 1522-8 are respectively shown applying temperature adjusting elements 1524A, 1524B and 1524-1 to 1524-8 at respective application widths 1510A, 1510B and 1510-1 to 1510-8 to the calender roller surface 1502 at left bare surface 1508A, right bare surface 1508B and the calender roller surface 1502 previously occupied by the plurality of electrode films 1504-1 to 1504-8, respectively.

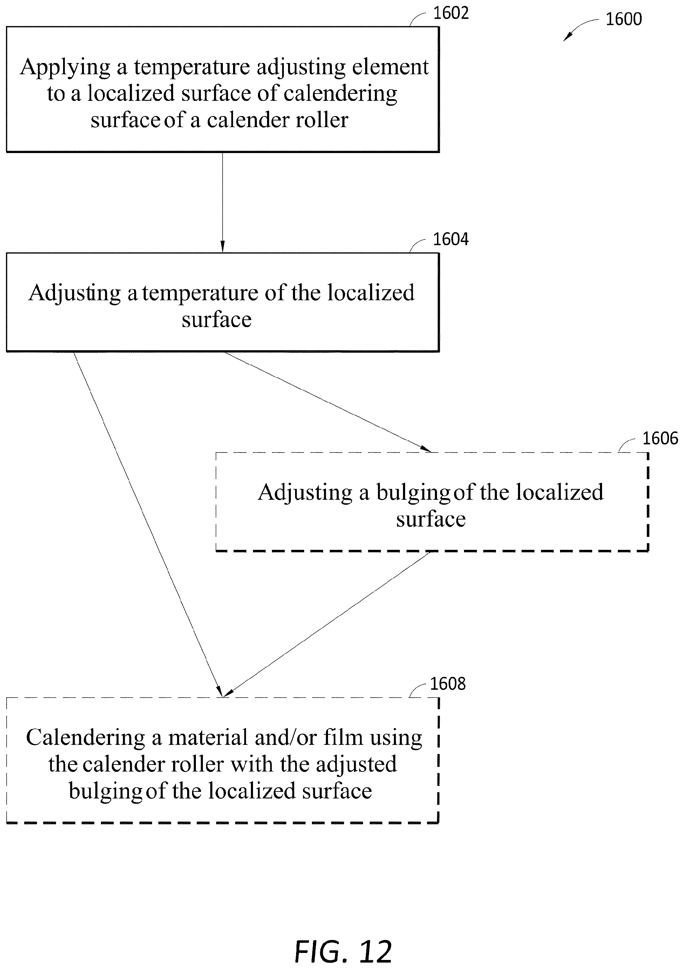

FIG. 12 shows a method 1600 of adjusting a temperature of a localized surface of a calender roller. The method 1600 includes applying 1602 a temperature adjusting element to a localized surface of calendering surface of a calender roller, which adjusts 1604 a temperature of the localized surface. The method 1600 optionally includes where adjusting 1604 a temperature of the localized surface adjusts 1606 a bulging of the localized surface. The method 1600 optionally includes calendering 1608 a material and/or film using the calender roller with the adjusted bulging of the localized surface. In some embodiments, the material is an electrode film material and/or electrode film mixture. In some embodiments, the film is an electrode film.

In some embodiments, the temperature adjusting device applies a temperature adjusting element to the localized calender surface to adjust the temperature. In some embodiments, the temperature adjusting element is selected from a solid (e.g., thermally conductive pad, thermally conductive gel), a liquid (e.g., liquid nitrogen), a gas (e.g., hot air, cold air, room temperature air), an electromagnetic field (e.g., inductive heating, inductive cooling, radiative heating (e.g., infrared wave), radiative cooling), and combinations thereof. In some embodiments, the temperature of the temperature adjusting element comprises a temperature of, of about, of at most, or of at most about, -200°C, -195°C, -150°C, -100°C, - 50°C, -25°C, 0°C, 10°C, 20°C, 25°C, 50°C, 75°C, 100°C, 150°C, 200°C, or any range of values therebetween. In some embodiments, the temperature adjustive device is configured to adjust the temperature of the localized surface to a temperature of, of about, of at least, or of at least about, 50°C, 75°C, 80°C, 90°C, 95°C, 100°C, 105°C, 110°C, 115°C, 125°C, 130°C, 150°C, or any range of values therebetween.

In some embodiments, the localized area the localized surface occupies out of a total area of the calendering surface is, is about, is at most, or is at most about, 0.5%, 1%, 2%, 3%, 4%, 5%, 10%, 15%, 20%, 25%, 30%, 35%, 40%, 45%, 50%, 55%, 60%, or any range of values therebetween. In some embodiments, the localized surface is a circumferential surface of the calendering surface which encircles the calendering surface. In some embodiments, the localized surface is a non-circumferential surface of the calendering surface that occupies only a portion of a circumference of the calendering surface. In some embodiments, the localized surface and/or application of the temperature adjusting element occupies a width of the calendering surface. In some embodiments, such a width is, is about, is at least, or is at least about, 5 mm, 10 mm, 15 mm, 20 mm, 25 mm, 30 mm, 40 mm, 50 mm, 60 mm, 70 mm, 80 mm, 90 mm, 100 mm, 120 mm, 150 mm, 175 mm, 200 mm, 250 mm or 300 mm, or any range of values therebetween. In some embodiments, the localized surface includes a bulge of, of about, of at least, or of at least about, 0 µm, 1 µm, 2 µm, 3 µm, 4 µm, 5 µm, 6 µm, 7 µm, 8 µm, 9 µm, 10 µm, 11 µm, 12 µm, 15 µm, 18 µm, 20 µm, 25 µm or 30 µm, or any range of values therebetween.

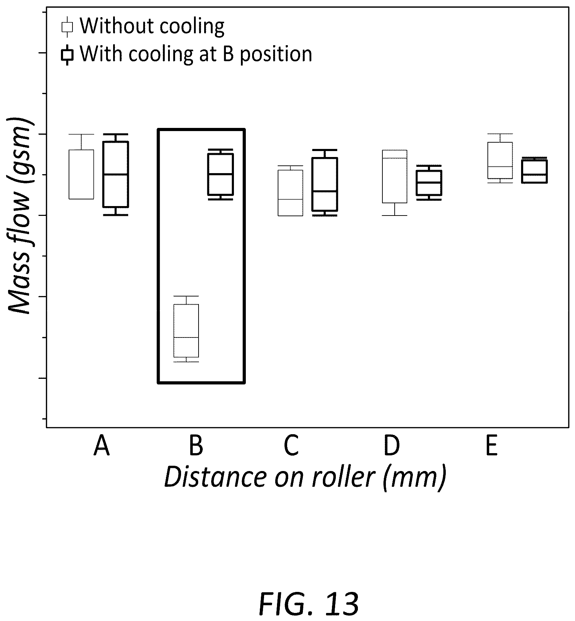

FIG. 13 shows a graph of a material mass flow through the nip of a calender system at various distances of the calender roller surface, where it is shown that without selective cooling at the B position on the roller, mass flow is lower that other distances measured. However, with selective cooling at B position, a bulge was reduced therefore the mass flow is substantially the same as other distances measured.

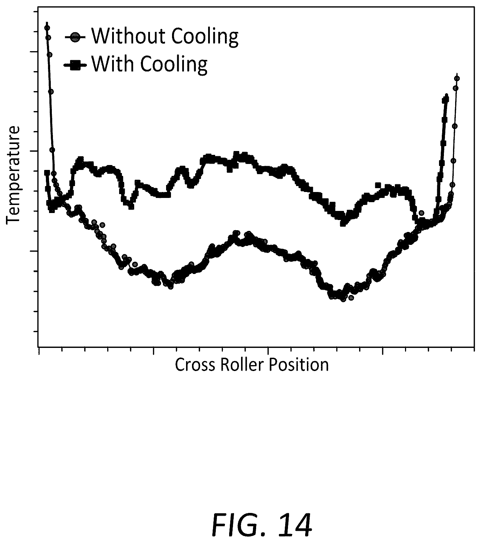

FIG. 14 shows the temperature of the calendering surface of a calender roller at different positions across the cross roller of a material. The figure illustrates a calender roller without cooling and a calender roller with selective cooling of localized surfaces. While the calendering surface temperatures seen in the calender roller without cooling show relatively large variations, the calendering surface temperatures seen in the calender roller with cooling show relatively less variations.

### Combination Thickness Measurement and Bulging Control

In some embodiments, the devices, systems and/or methods described herein may be combined, for example in order to control the thickness, density and/or loading of a film. For example, the thickness measurement devices, systems and methods described may be utilized in devices, systems and methods for controlling the bulging of the calendering surface such that the thicknesses measured can be used to actively control and/or adjust the bulging of the calendering surface throughout the calendering process.

In some examples, a system includes a temperature adjusting device and/or a calender roll device, and a topography sensor is positioned over a calendering surface. In some embodiments, a controller, temperature adjusting device and/or a calender roll device is communicatively coupled to a topography sensor and/or one or more temperature sensors. In some embodiments, a controller is configured to sense the topography of the calender surface through the topography sensor, and adjust the position, temperature and/or bulging of the calendering surface of the calender roller using the roller bearing blocks, temperature adjusting device and/or a calender roll device. In some embodiments, a controller is configured to sense a temperature of the calender roll through a temperature sensor, and adjust the position, temperature and/or bulging of the calendering surface of the calender roller using the roller bearing blocks, temperature adjusting device and/or a calender roll device.

In some embodiments, a controller is in electrical communication with the system and configured to adjust the output of the temperature adjusting device and/or a calender roll device based on the temperature and/or topography detected by the temperature sensor and/or topography sensor. The controller can thereby communicate with the temperature adjusting device and/or a calender roll device to advantageously adjust the temperature of the calender roller based on the data from the temperature sensor and/or topography sensor.

### Electrode Materials, Electrode Films, Electrodes and Energy Storage Devices

In some embodiments, films and/or materials described herein may include electrode films and/or electrode materials. An active material (e.g., cathode active material, anode active material) may be used in the preparation of an electrode film and/or electrode for an energy storage device. In some embodiments, an electrode comprises a current collector and an electrode film.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO4 or "LFP"), lithium manganese iron phosphate (e.g., LiMn0.6Fe0.4PO4 or "LMFP"), lithium nickel manganese cobalt oxide (i.e., LiNixMnyCo1-x-yO2 or "NMC"), lithium nickel cobalt aluminum oxide (i.e., LiNixCoyAlzO2 or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO4 (i.e., "lithium iron phosphate" and "LFP") and LiMn1-xFexPO4 (i.e., "lithium manganese iron phosphate" and "LMFP") (e.g., LiMn0.6Fe0.4PO4 or LiMn0.8Fe0.2PO4). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film mixture and/or electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, the electrode film mixture and/or an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, the electrode film mixture and/or an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film mixture and/or the electrode film includes a binder. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film mixture and/or the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are freestanding films formed using the dry process from the dry particle mixture. A process for forming an active layer or electrode film can include fibrillizing the fibrillizable binder component(s) such that the film comprises fibrillized binder. In further embodiments, a freestanding active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector (e.g., a coated lane is disposed on a foil layer) to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, an energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF6), lithium bis(trifluoromethanesulfonyl)imide (LiFSI), lithium tetrafluoroborate (LiBF4), lithium perchlorate (LiClO4), lithium bis(trifluoromethansulfonyl)imide (LiN(SO2CF3)2), lithium trifluoromethansulfonate (LiSO3CF3), lithium bis(oxalato)borate (LiB(C2O4)2), lithium bis(fluorosulfonyl)imide (LiN(SO2F)2, lithium difluoro(oxalato)borate (LiC2BF2O4) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

The foregoing disclosure is not intended to limit the present disclosure to the precise forms or embodiments disclosed herein. As such, it is contemplated that various alternative forms, embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed battery system. It is to be understood that the forms of disclosure herein shown and described are to be taken as representative embodiments. Equivalent elements, or materials may be substituted for those representatively illustrated and described herein. Moreover, certain features of the disclosure may be utilized independently of the use of other features, all of which is apparent to one skilled in the art after having the benefit of this description of the disclosure. Expressions such as "including", "comprising", "incorporating", "consisting of, "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense and should in no way be construed as limiting of the present disclosure. All joinder references (e.g., connected, associated, coupled, and the like) are only used to aid the reader's understanding of the present disclosure, and may not create limitations, particularly as to the position, orientation, or use of the elements disclosed herein. Therefore, joinder references, if any, are to be construed broadly. Moreover, such joinder references may not necessarily infer that two elements are directly connected to each other.

Additionally, all numerical terms, such as, but not limited to, "first", "second", "one", "another", or any other ordinary and/or numerical terms, should also be taken only as identifiers, to assist the reader's understanding of the various elements, embodiments, variations and/ or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed in certain cases, as is useful in accordance with a particular application.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

### ITEMS:

1. A method of calendering an electrode film, comprising:
   rotating a calender roller comprising an electrode film disposed over the calender roller, wherein the electrode film comprises an electrode film thickness;
   measuring a first distance between a measurement device positioned over the calender roller and the electrode film and the calender roller during rotation of the calender roller;
   measuring a second distance between the measurement device and the electrode film during rotation of the calender roller;
   determining the electrode film thickness based at least in part on the first and second distances; and
   setting a thickness of at least a portion of the electrode film based at least in part on the determined film thickness.
2. The method of item 1, wherein rotating the calender roller transports the electrode film in a downstream direction to a second calender roller, the calender roller and the second calender roller form a nip comprising a nip distance, and the electrode film enters the nip.
3. The method of item 2, further comprises adjusting at least one of the nip distance, a first temperature of the calender roller, and a second temperature of the second calender roller.
4. The method of item 1, wherein a first temperature of the calender roller is at least about 150°C.
5. The method of item 1, wherein the calender roller is rotated at a circumferential speed of about 0.1-50 m/min.
6. The method of item 1, wherein the measurement device comprises a first sensor and a second sensor, wherein the first sensor is positioned over the calender roller and configured to measure the first distance between the first sensor and the calender roller, and wherein the second sensor is positioned over the electrode film and configured to measure the second distance between the second sensor and the electrode film.
7. The method of item 1, wherein measuring of the first and second distances is a contactless measurement.
8. The method of item 7, wherein the contactless measurement is selected from the group consisting of a capacitance measurement, an optical measurement, and combinations thereof.
9. The method of item 1, wherein measuring the first and second distances is performed at a resolution of at most about 0.5 µm.
10. The method of item 1, wherein the measurement device further comprises a bearing attached to a measurement device support, a first wheel and a second wheel, wherein the second wheel is downstream of the first wheel and each of the first and second wheels are in contact with the calender roller when the measurement device is positioned over the calender roller.
11. The method of item 1, wherein the electrode film is a dry electrode film substantially absent of solvent residue.
12. A calender system for controlling a surface of a calender roller, comprising:
   a calender roller comprising a calendering surface, wherein the calendering surface comprises a localized surface; and
   a temperature adjusting system comprising a temperature adjusting device positioned over the calendering surface, wherein the temperature adjusting device is configured to adjust a temperature of the localized surface.
13. The system of item 12, wherein the localized surface is a circumferential surface of the calendering surface.
14. The system of item 12, wherein a localized area the localized surface occupies out of a total area of the calendering surface is at most about 50%.
15. The system of item 12, wherein the temperature adjusting system comprises a plurality of temperature adjusting devices.
16. The system of item 12, further comprising a temperature probe positioned over the calendering surface and configured to measure a temperature of the localized surface.
17. A method of adjusting the calender system of item 12, comprising applying a temperature adjusting element from the temperature adjusting device to the localized surface to adjust the temperature of the localized surface.
18. The method of item 17, wherein the temperature adjusting element is selected from the group consisting of a solid, a liquid, a gas, an electromagnetic field, and combinations thereof.
19. The method of item 17, wherein the temperature adjusting element is a gas.
20. The method of item 17, wherein the temperature adjusting element comprises a material comprising a material temperature greater than or less than the temperature of the localized surface.
21. The method of item 17, wherein adjusting the temperature of the localized surface adjusts a bulging of the localized surface.

## Claims

1. A method of calendering an electrode film, comprising:
rotating a calender roller comprising an electrode film disposed over the calender roller, wherein the electrode film comprises an electrode film thickness;
measuring a first distance between a measurement device positioned over the calender roller and the electrode film and the calender roller during rotation of the calender roller;
measuring a second distance between the measurement device and the electrode film during rotation of the calender roller;
determining the electrode film thickness based at least in part on the first and second distances; and
setting a thickness of at least a portion of the electrode film based at least in part on the determined film thickness.

2. The method of Claim 1, wherein rotating the calender roller transports the electrode film in a downstream direction to a second calender roller, the calender roller and the second calender roller form a nip comprising a nip distance, and the electrode film enters the nip.

3. The method of Claim 2, further comprises adjusting at least one of the nip distance, a first temperature of the calender roller, and a second temperature of the second calender roller.

4. The method of Claim 1, wherein a first temperature of the calender roller is at least about 150°C.

5. The method of Claim 1, wherein the calender roller is rotated at a circumferential speed of about 0.1-50 m/min.

6. The method of Claim 1, wherein the measurement device comprises a first sensor and a second sensor, wherein the first sensor is positioned over the calender roller and configured to measure the first distance between the first sensor and the calender roller, and wherein the second sensor is positioned over the electrode film and configured to measure the second distance between the second sensor and the electrode film.

7. The method of Claim 1, wherein measuring of the first and second distances is a contactless measurement.

8. The method of Claim 1, wherein measuring the first and second distances is performed at a resolution of at most about 0.5 µm.

9. The method of Claim 1, wherein the measurement device further comprises a bearing attached to a measurement device support, a first wheel and a second wheel, wherein the second wheel is downstream of the first wheel and each of the first and second wheels are in contact with the calender roller when the measurement device is positioned over the calender roller.

10. A calender system for controlling a surface of a calender roller, comprising:
a calender roller comprising a calendering surface, wherein the calendering surface comprises a localized surface; and
a temperature adjusting system comprising a temperature adjusting device positioned over the calendering surface, wherein the temperature adjusting device is configured to adjust a temperature of the localized surface.

11. The system of Claim 10, wherein the localized surface is a circumferential surface of the calendering surface.

12. The system of Claim 10, further comprising a temperature probe positioned over the calendering surface and configured to measure a temperature of the localized surface.

13. The system of Claim 12, wherein the temperature adjusting device is configured to apply a temperature adjusting element to the localized surface.

14. The system of Claim 13, wherein the temperature adjusting element is selected from the group consisting of a solid, a liquid, a gas, an electromagnetic field, and combinations thereof.

15. The system of Claim 13, wherein the temperature adjusting device is configured such that adjusting the temperature of the localized surface adjusts a bulging of the localized surface.
